# EUROPÄISCHE PATENTSCHRIFT

(11) **EP 3 783 231 B1**
(45) Veröffentlichungstag und Bekanntmachung des Hinweises auf die Patenterteilung: **22.02.2023**
(21) Anmeldenummer: 20185879.2
(22) Anmeldetag: 15.07.2020
(51) Int. Cl.: F16B 5/02

(54) **BEFESTIGUNGSVORRICHTUNG**
FIXING DEVICE
DISPOSITIF DE FIXATION

(30) Priorität: 19.08.2019 DE 102019122149
(43) Veröffentlichungstag der Anmeldung: 24.02.2021
(73) Patentinhaber: a.i.m. all in metal GmbH, 09514 Pockau-Lengefeld (DE)
(72) Erfinder: Betthausen, André, 08280 Aue (DE)
(74) Vertreter: Pelster Behrends Patentanwälte PartG mbB

(56) Entgegenhaltungen:
- EP-A1- 1 420 176
- JP-A- 2011 190 828
- US-A- 2 157 641
- US-A- 2 783 674

## Beschreibung

Die Erfindung betrifft eine Befestigungsvorrichtung mit zumindest zwei Aufnahmeabschnitten, welche voneinander beabstandet sind und jeweils eine Materialauskragung sowie eine von der Bewandung der Materialauskragung umschlossene Aufnahmeausnehmung zur Aufnahme eines Befestigungselements aufweisen, und einer Verbindungsstruktur, welche die zumindest zwei Aufnahmeabschnitte miteinander verbindet.

Ferner betrifft die Erfindung ein Verfahren zum Herstellen einer Befestigungsvorrichtung aus einem Werkstück, mit dem Schritt: Erzeugen von zumindest zwei voneinander beabstandeten Materialauskragungen an dem Werkstück in einem mehrstufigen Umformprozess.

Gattungsgemäße Befestigungsvorrichtungen werden beispielsweise verwendet, um zwei oder mehr als zwei Körper temporär oder dauerhaft aneinander zu befestigen. Hierzu werden die zu befestigenden Körper jeweils mittels eines Befestigungselements kraft- und/oder formschlüssig mit einem Aufnahmeabschnitt der Befestigungsvorrichtung verbunden. Beispielsweise kommen als Befestigungselemente Schrauben oder Stifte zum Einsatz, welche in die von den Bewandungen der Materialauskragungen umschlossenen Aufnahmeausnehmungen eindrehbar oder einpressbar sind.

Befestigungsvorrichtungen kommen insbesondere bei der Herstellung von Fahrzeugen zum Einsatz. Bei der Produktion von Fahrzeugen werden in diesem Zusammenhang immer höhere Anforderungen an die eingesetzten Befestigungsvorrichtungen gestellt. Dies gilt sowohl in Bezug auf die mechanischen Eigenschaften der Befestigungsvorrichtungen als auch in Bezug auf deren wirtschaftliche Herstellbarkeit.

In den Druckschriften US 2 783 674 A, US 2 157 641 A, EP 1 420 176 A1 und JP 2011 190828 A sind Befestigungsvorrichtungen offenbart.

Bei entsprechenden Befestigungsvorrichtungen besteht das Problem, dass in verschiedenen Anwendungsbereichen unterschiedliche Abstände und/oder Ausrichtungen der Aufnahmeausnehmungen erforderlich sind. Die zur Herstellung entsprechender Befestigungsvorrichtungen eingesetzten Folgeverbundwerkzeuge erlauben bisher jedoch nicht die Herstellung von Befestigungsvorrichtungen mit unterschiedlich beabstandeten und/oder unterschiedlich ausgerichteten Aufnahmeausnehmungen. Ein zur Abstandsänderung erforderlicher Umbau des Folgeverbundwerkzeugs ist mit einem hohen Zeit- und Kostenaufwand verbunden, wodurch die Herstellungskosten entsprechender Befestigungsvorrichtungen deutlich erhöht werden. Aus diesem Grund wird in der Praxis üblicherweise lediglich eine Bauteilkonfiguration mit einem Folgeverbundwerkzeug gefertigt.

Die der Erfindung zugrundeliegende Aufgabe besteht somit darin, die Herstellung von Befestigungsvorrichtungen mit unterschiedlich beabstandeten und/oder ausgerichteten Aufnahmeabschnitten zu vereinfachen.

Die Aufgabe wird gelöst durch eine Befestigungsvorrichtung der eingangs genannten Art, wobei die Materialauskragungen eine variierende Materialstärke aufweisen und die die Aufnahmeabschnitte miteinander verbindende Verbindungsstruktur der erfindungsgemäßen Befestigungsvorrichtung zwei gegenüberliegende längliche Verbindungsstege umfasst, welche jeweils innerhalb eines Krümmungsbereichs gebogen ausgebildet sind, wobei die Materialauskragungen und die zwei gegenüberliegenden länglichen Verbindungsstege integrale Bestandteile eines einstückigen Körpers sind.

Dadurch, dass die länglichen Verbindungsstege in dem Krümmungsbereich gebogen ausgebildet sind, kann über die Form der Krümmung bzw. Biegung der Abstand zwischen den Aufnahmeabschnitten und somit der Abstand zwischen den Aufnahmeausnehmungen der Aufnahmeabschnitte eingestellt werden. Der Abstand der Aufnahmeabschnitte kann somit durch das Einbringen unterschiedlicher Krümmungen bzw. Biegungen in die zwei gegenüberliegenden länglichen Verbindungsstege, welche jeweils die zumindest zwei Aufnahmeabschnitte miteinander verbinden, variiert werden.

Die Materialauskragungen der zumindest zwei Aufnahmeabschnitte werden vorzugsweise durch Tubenziehen bzw. durch das Oeillet-Verfahren hergestellt, wobei die Materialauskragungen auch als Tuben bezeichnet werden können. Beim Tubenziehen ist ein ausreichender Achsabstand zwischen den zu ziehenden Tuben erforderlich, um einen Materialverlust in den Ziehkonturen zu vermeiden. Bei der Herstellung der erfindungsgemäßen Befestigungsvorrichtung kann die Tubenherstellung zunächst mit einem vergleichsweise großen Tubenabstand erfolgen, sodass die Tubenerzeugung mit hoher Güte und Präzision erfolgen kann. Nach Abschluss des Tubenzieh-Prozesses kann dann der Abstand zwischen den zumindest zwei hergestellten Tuben auf das gewünschte Maß durch Einbringen einer Krümmung bzw. Biegung in die zwei gegenüberliegenden länglichen Verbindungsstege flexibel eingestellt werden. Unterschiedliche Befestigungsvorrichtungen können auf diese Weise kostengünstig mittels der gleichen Herstellungsmaschine gefertigt werden, sofern die Herstellungsmaschine die Einbringung unterschiedlicher Biegungen bzw. Krümmungen in die zwei gegenüberliegenden länglichen Verbindungsstege erlaubt.

Die Materialauskragungen und Aufnahmeausnehmungen einzelner Aufnahmeabschnitte einer Befestigungsvorrichtung können identisch sein oder sich voneinander unterscheiden. Insbesondere können einzelne Materialauskragungen unterschiedliche Dimensionen und/oder Geometrien, also etwa unterschiedliche Grundformen, unterschiedliche Auskragungshöhen oder unterschiedliche Bewandungsverläufe, aufweisen. Die Aufnahmeausnehmungen einzelner Aufnahmeabschnitte können sich hinsichtlich ihrer Form und/oder Größe unterschieden. Ferner kann eine oder können mehrere Aufnahmeausnehmungen ein Gewinde aufweisen, wobei gleichzeitig eine oder mehrere Aufnahmeausnehmungen gewindefrei ausgebildet sind.

Die Materialauskragungen und Aufnahmeausnehmungen einzelner Aufnahmeabschnitte können auch unterschiedliche Ausrichtungen oder Anstellwinkel aufweisen. Somit können mittels der Befestigungsvorrichtung auch Übereckbefestigungen umgesetzt werden. Beispielsweise weisen die Mittelachsen einzelner Materialauskragungen bzw. Aufnahmeausnehmungen einen Winkelversatz zueinander auf. Der Winkelversatz kann beispielsweise 90 Grad betragen, sodass einzelne Materialauskragungen bzw. Aufnahmeausnehmungen rechtwinklig zueinander angeordnet sind.

Außerdem können einzelne Aufnahmeabschnitte einer Befestigungsvorrichtung einen Höhenversatz aufweisen. Beispielsweise weisen die Materialauskragungen und Aufnahmeausnehmungen einzelner Aufnahmeabschnitte zwar die gleiche Ausrichtung auf, sind aber in unterschiedlichen Höhenebenen angeordnet, wobei die Höhenebenen beabstandet zueinander angeordnet sind.

Die von den Aufnahmeausnehmungen aufnehmbaren Befestigungselemente können beispielsweise Schrauben oder Stifte sein, welche in die Aufnahmeausnehmungen einschraubbar oder einpressbar sein können. Entsprechend können die Innenbewandungen der Aufnahmeausnehmungen der Befestigungsvorrichtung ein Gewinde aufweisen.

Die länglichen Verbindungsstege sind innerhalb des Krümmungsbereichs vorzugsweise zumindest abschnittsweise bogenförmig und/oder parabelförmig ausgebildet. Durch die gebogene Ausbildung weisen die zwei gegenüberliegenden länglichen Verbindungsstege vorzugsweise eine Wölbung oder Bauchung auf. Insbesondere können die länglichen Verbindungsstege als längliche flache Materialstreifen ausgebildet sein.

Die Materialauskragungen weisen vorzugsweise eine zumindest abschnittsweise konische äußere Mantelfläche auf. Die Materialauskragungen können zumindest abschnittsweise trichterförmig ausgebildet sein. Die Materialauskragungen bilden vorzugsweise einen rotationssymmetrischen Hohlkörper aus.

Erfindungsgemäß weisen die Materialauskragungen eine variierende Materialstärke auf. Insbesondere ist die Materialstärke im Bereich des Auskragungsansatzes maximal. Aufgrund hoher statischer und/oder dynamischer Dauerbelastung ist es häufig erforderlich, dass die Materialstärke bereichsweise größer als die Blechstärke des zur Herstellung verwendeten Metallblechs im Ausgangszustand ist. Somit kann die Befestigungsvorrichtung an den erforderlichen Stellen, wie beispielsweise am Auskragungsansatz, besonders hohe Kräfte bzw. Beanspruchungen aufnehmen.

Die Befestigungsvorrichtung kann auch mehr als zwei Aufnahmeabschnitte, beispielsweise drei, vier, fünf oder sechs Aufnahmeabschnitte, aufweisen, welche über eine Verbindungsstruktur miteinander verbunden sind. Die Verbindungsstruktur kann in diesem Fall zwei oder mehrere längliche Verbindungsstege umfassen, welche innerhalb eines Krümmungsbereichs gebogen ausgebildet sind. Mehrere oder sämtliche Materialauskragungen und die von den Bewandungen der Materialauskragungen umschlossenen Aufnahmeausnehmungen können dabei auf einer Längsachse angeordnet sein. Eine oder mehrere Materialauskragungen sowie die von den Bewandungen der Materialauskragungen umschlossenen Aufnahmeausnehmungen können jedoch auch beabstandet von der Längsachse angeordnet sein.

Die Befestigungsvorrichtung kann beispielsweise als Umformteil, insbesondere als Blechumformteil, ausgebildet sein. Es können auch einzelne Teile der Befestigungsvorrichtung als Umformteile, insbesondere als Blechumformteile, ausgebildet sein. Beispielsweise ist das Teil oder sind die Teile, welche die Aufnahmeabschnitte tragen, als Umformteile, insbesondere als Blechumformteile, ausgebildet. Die Teile, welche die Aufnahmeabschnitte tragen, können als Kaltschlagteile ausgebildet sein. Ferner kann auch die Verbindungsstruktur aus einem oder mehreren Umformteilen, insbesondere Blechumformteilen, ausgebildet sein.

In einer bevorzugten Ausführungsform der erfindungsgemäßen Befestigungsvorrichtung verlaufen die zwei gegenüberliegenden länglichen Verbindungsstege jeweils außerhalb und/oder zumindest abschnittsweise beabstandet von der direkten Verbindungsachse zwischen den Materialauskragungen. Vorzugsweise verlaufen die zwei gegenüberliegenden länglichen Verbindungsstege seitlich beabstandet von der direkten Verbindungsachse zwischen den Materialauskragungen. Vorzugsweise befindet sich auf der direkten Verbindungsachse zwischen den Materialauskragungen ein Freiraum, welcher die Abstandsänderung zwischen den Aufnahmeabschnitten erlaubt. Alternativ verlaufen die zwei gegenüberliegenden länglichen Verbindungsstege zumindest abschnittsweise entlang der direkten Verbindungsachse zwischen den Materialauskragungen. Die zwei gegenüberliegenden länglichen Verbindungsstege können beispielsweise seitlich geschlitzt ausgebildet sein. Die seitliche Schlitzung vereinfacht die Einbringung der Biegung in den Krümmungsbereich.

In einer anderen bevorzugten Ausführungsform der erfindungsgemäßen Befestigungsvorrichtung sind die Aufnahmeabschnitte in einer Längsrichtung voneinander beabstandet und die zwei gegenüberliegenden länglichen Verbindungsstege sind jeweils innerhalb des Krümmungsbereichs in einer Querrichtung gebogen ausgebildet. Die Längsrichtung und die Querrichtung verlaufen vorzugsweise rechtwinklig zueinander. Vorzugsweise verlaufen die zwei gegenüberliegenden länglichen Verbindungsstege außerhalb des Krümmungsbereichs ebenfalls in Längsrichtung, wobei diese innerhalb des Krümmungsbereichs ihre Erstreckungsrichtung ändern. Vorzugsweise weisen die zwei gegenüberliegenden länglichen Verbindungsstege vor und/oder hinter dem Krümmungsbereich jeweils einen Längserstreckungsbereich auf, innerhalb welchen sich die zwei gegenüberliegenden länglichen Verbindungsstege in Längsrichtung erstrecken.

In einer weiteren bevorzugten Ausführungsform der erfindungsgemäßen Befestigungsvorrichtung weisen die zwei gegenüberliegenden länglichen Verbindungsstege innerhalb des Krümmungsbereichs eine nach innen gerichtete seitliche Einbuchtung auf. Die seitliche Einbuchtung ist vorzugsweise eine in Querrichtung nach innen gerichtete Wölbung oder Bauchung. Die Einbuchtung kann eine Materialfaltung sein. Alternativ können die zwei gegenüberliegenden länglichen Verbindungsstege innerhalb des Krümmungsbereichs eine nach außen gerichtete seitliche Ausbuchtung aufweisen. In diesem Fall ist die seitliche Ausbuchtung vorzugsweise eine in Querrichtung nach außen gerichtete Wölbung oder Bauchung. Die Ausbuchtung kann ebenfalls eine Materialfaltung sein.

Erfindungsgemäß umfasst die Verbindungsstruktur der Befestigungsvorrichtung zwei gegenüberliegende längliche Verbindungsstege, welche jeweils innerhalb eines Krümmungsbereichs gebogen ausgebildet sind. Die zwei gegenüberliegenden länglichen Verbindungsstege können dabei jeweils gemäß einer der vorstehend beschriebenen Ausführungsformen ausgebildet sein. Vorzugsweise sind die zumindest zwei Materialauskragungen sowie die von den Bewandungen der Materialauskragungen umschlossenen Aufnahmeausnehmungen zwischen den zwei gegenüberliegenden länglichen Verbindungsstegen angeordnet.

Die erfindungsgemäße Befestigungsvorrichtung wird ferner dadurch vorteilhaft weitergebildet, dass die gegenüberliegenden länglichen Verbindungsstege der Verbindungsstruktur jeweils innerhalb des Krümmungsbereichs eine seitliche Einbuchtung in Richtung des gegenüberliegenden anderen länglichen Verbindungsstegs aufweisen. Vorzugsweise sind die seitlichen Einbuchtungen der gegenüberliegenden länglichen Verbindungsstege spiegelsymmetrisch zueinander ausgebildet.

In einer weiteren bevorzugten Ausführungsform der erfindungsgemäßen Befestigungsvorrichtung erstrecken sich die Materialauskragungen der Aufnahmeabschnitte jeweils von einer Basisplatte nach oben oder nach unten, wobei der Krümmungsbereich des zumindest einen länglichen Verbindungsstegs oder die Krümmungsbereiche der zwei gegenüberliegenden länglichen Verbindungsstege der Verbindungsstruktur oberhalb oder unterhalb der Basisplatten verlaufen. Die zwei gegenüberliegenden länglichen Verbindungsstege sind vorzugsweise gegenüber den Basisplatten umgebogen, vorzugsweise nach oben oder nach unten umgebogen. Die zwei gegenüberliegenden länglichen Verbindungsstege verlaufen vorzugsweise aufrecht gegenüber den Basisplatten.

Es ist ferner eine erfindungsgemäße Befestigungsvorrichtung bevorzugt, bei welcher die Befestigungsvorrichtung spiegelsymmetrisch in Bezug auf eine sich in Längsrichtung erstreckende Symmetrieebene ausgebildet ist. Die sich in Längsrichtung erstreckende Symmetrieebene ist vorzugsweise eine aufrechte Symmetrieebene, wobei die Mittelachse einer Aufnahmeausnehmung oder die Mittelachsen mehrerer oder sämtlicher Aufnahmeausnehmungen innerhalb der sich in Längsrichtung erstreckenden Symmetrieebene liegen. Alternativ oder zusätzlich ist die Befestigungsvorrichtung spiegelsymmetrisch in Bezug auf eine sich in Querrichtung erstreckende Symmetrieebene ausgebildet. Die sich in Querrichtung erstreckende Symmetrieebene schneidet vorzugsweise die Krümmungsbereiche der zwei gegenüberliegenden länglichen Verbindungsstege.

Die länglichen Verbindungsstege der Befestigungsvorrichtung können auch formschlüssig, stoffschlüssig und/oder kraftschlüssig miteinander verbunden sein. Beispielsweise bilden die länglichen Verbindungsstege eine umlaufende Struktur aus. Auf diese Weise wird die Stabilität der Befestigungsvorrichtung erheblich gesteigert. Insbesondere laufen die länglichen Verbindungsstege um die Materialauskragungen um. Beispielsweise sind die länglichen Verbindungsstege miteinander gefügt, insbesondere verschweißt. In einer weiteren bevorzugten Ausführungsform der erfindungsgemäßen Befestigungsvorrichtung ist die Befestigungsvorrichtung einstückig ausgebildet. Alternativ kann die Befestigungsvorrichtung auch ein aus mehreren Teilen zusammengebautes Teil, also ein sogenanntes ZB-Teil, sein. Beispielsweise können einzelne Teile der Befestigungsvorrichtung miteinander gefügt sein, wobei das Fügen beispielsweise durch Laserschweißen oder Durchsetzfügen, also dem sogenannten Clinchen, erfolgt. Außerdem können auch einzelne Teile der Befestigungsvorrichtung ineinander eingepresst sein, also über Pressfügen miteinander verbunden sein. Darüber hinaus kommen auch weitere Fügeverfahren in Betracht, welche zu einer formschlüssigen, stoffschlüssigen und/oder kraftschlüssigen Verbindung führen. In einer Ausführungsform können die zumindest zwei Aufnahmeabschnitte mit der Verbindungsstruktur gefügt, insbesondere laserverschweißt sein. Vorzugsweise weist die Befestigungsvorrichtung außerhalb der Materialauskragungen eine im Wesentlichen konstante Materialstärke auf. Die Materialauskragungen und die zwei gegenüberliegenden länglichen Verbindungsstege sind vorzugsweise integrale Bestandteile eines einstückigen Körpers, insbesondere eines einstückigen Blechumformkörpers.

Die der Erfindung zugrundeliegende Aufgabe wird ferner durch ein Verfahren der eingangs genannten Art gelöst, wobei im Rahmen des erfindungsgemäßen Verfahrens zwei die Materialauskragungen miteinander verbindende gegenüberliegende längliche Verbindungsstege erzeugt werden, wobei die Materialauskragungen eine variierende Materialstärke aufweisen und wobei die Materialauskragungen und die zwei gegenüberliegenden länglichen Verbindungsstege integrale Bestandteile eines einstückigen Körpers sind. Im Anschluss wird der Abstand zwischen den Materialauskragungen durch Erzeugen jeweils einer Krümmung an den zwei gegenüberliegenden die Materialauskragungen miteinander verbindenden länglichen Verbindungsstegen verändert. Das Erzeugen der Krümmung erfolgt vorzugsweise durch Hineinbewegen eines Körpers in den jeweiligen Verbindungssteg, sodass der jeweilige Verbindungssteg durch eine von dem Körper aufgebrachte Biegekraft umgebogen wird.

Das erfindungsgemäße Verfahren wird vorzugsweise zum Herstellen einer Befestigungsvorrichtung nach einer der vorstehend beschriebenen Ausführungsformen eingesetzt. Hinsichtlich der Vorteile und Modifikationen des erfindungsgemäßen Verfahrens wird somit zunächst auf die Vorteile und Modifikationen der erfindungsgemäßen Befestigungsvorrichtung verwiesen.

Vorzugsweise handelt es sich bei dem erfindungsgemäßen Verfahren um ein spanloses Herstellungsverfahren, bei welchem eine Kaltumformung des Werkstücks erfolgt. Das Verfahren kann das Erzeugen von mehreren, beispielsweise das Erzeugen von zwei, drei, vier, fünf oder sechs, voneinander beabstandeten Materialauskragungen an dem Werkstück umfassen. Die im Rahmen des erfindungsgemäßen Verfahrens hergestellten Materialauskragungen sind vorzugsweise jeweils Bestandteil eines Aufnahmeabschnitts. Die zwei gegenüberliegenden länglichen Verbindungsstege sind entsprechend vorzugsweise Bestandteil einer die Aufnahmeabschnitte verbindenden Verbindungsstruktur.

Das erfindungsgemäße Verfahren wird ferner dadurch vorteilhaft weitergebildet, dass der zumindest eine die Materialauskragungen miteinander verbindende längliche Verbindungssteg durch Ausschneiden oder Ausstanzen eines Materialabschnitts aus dem Werkstück, erzeugt wird. Die Form bzw. Gestalt des beim Ausschneiden entstehenden Ausschnitts bzw. des beim Ausstanzen entstehenden Stanzabfalls ist abhängig von der übrigen Ausgestaltung der Befestigungsvorrichtung. Beispielsweise variiert die Form bzw. die Gestalt des Ausschnitts bzw. des Stanzabfalls in Abhängigkeit der Form und/oder Position der Materialauskragungen. Der ausgeschnittene oder ausgestanzte Materialabschnitt ist vorzugsweise ein ausgeschnittenes oder ausgestanztes Materialfenster und/oder umfasst einen Materialbereich auf der direkten Verbindungsachse zwischen den Materialauskragungen. Alternativ oder zusätzlich umfasst das Verfahren das Umbiegen der zwei gegenüberliegenden länglichen Verbindungsstege jeweils in Richtung der Materialauskragungen. Das Umbiegen der zwei gegenüberliegenden länglichen Verbindungsstege in Richtung der Materialauskragungen erfolgt vorzugsweise durch ein Hochklappen der zwei gegenüberliegenden länglichen Verbindungsstege oder durch ein Umfalten der zwei gegenüberliegenden länglichen Verbindungsstege in Richtung der Materialauskragungen.

In einer weiteren bevorzugten Ausführungsform des erfindungsgemäßen Verfahrens erfolgt das Umbiegen der zwei gegenüberliegenden länglichen Verbindungsstege in Richtung der Materialauskragungen nach dem Erzeugen der Krümmung an den zwei gegenüberliegenden länglichen Verbindungsstegen. Die Krümmung ist somit zunächst eine Erhebung der länglichen Verbindungsstege, welche erst nach dem Umbiegen der länglichen Verbindungsstege zu einer seitlichen Einbuchtung wird. Alternativ kann das Umbiegen der zwei gegenüberliegenden länglichen Verbindungsstege in Richtung der Materialauskragungen vor dem Erzeugen der Krümmung an den zwei gegenüberliegenden länglichen Verbindungsstegen erfolgen.

In dem erfindungsgemäßen Verfahren werden zwei gegenüberliegende die Materialauskragungen miteinander verbindende längliche Verbindungsstege erzeugt, insbesondere durch Ausschneiden oder Ausstanzen eines Materialabschnitts aus dem Werkstück. Insbesondere wird der Abstand zwischen den Materialauskragungen durch Erzeugen jeweils einer Krümmung an den zwei gegenüberliegenden die Materialauskragungen miteinander verbindenden länglichen Verbindungsstegen verändert. Alternativ oder zusätzlich werden die zwei gegenüberliegenden länglichen Verbindungsstege jeweils in Richtung der Materialauskragungen umgebogen.

Es ist darüber hinaus ein erfindungsgemäßes Verfahren vorteilhaft, bei welchem die Materialauskragungen durch Tubenziehen erzeugt werden. Die Bewandungen der durch Tubenziehen erzeugten Materialauskragungen umschließen vorzugsweise jeweils eine Aufnahmeausnehmung. Das Verfahren kann ferner das Erzeugen eines Gewindes an den Innenbewandungen der Aufnahmeausnehmungen umfassen. Die Bewandungen der durch Tubenziehen erzeugten Materialauskragungen weisen erfindungsgemäß keine konstante Materialstärke auf. Vorzugsweise ist die Materialstärke der Bewandungen der Materialauskragungen am Auskragungsansatz maximal, da in diesem Bereich besonders hohe Kräfte und Belastungen aufgenommen werden müssen.

Das erfindungsgemäße Verfahren wird ferner dadurch vorteilhaft weitergebildet, dass das Herstellen der Befestigungsvorrichtung teilweise oder vollständig mittels eines Folgeverbundwerkzeugs und/oder eines Transferwerkzeugs erfolgt. Durch den Einsatz eines Folgeverbundwerkzeugs können große Stückzahlen der Befestigungsvorrichtung zu geringen Stückkosten hergestellt werden. Über die Anpassbarkeit des Abstands der Materialauskragungen lassen sich ohne großen Aufwand unterschiedliche Bauteilkonfigurationen umsetzen, ohne dass ein Umbau oder Austausch des Folgeverbundwerkzeugs erforderlich ist. Nachfolgend werden bevorzugte Ausführungsformen der Erfindung unter Bezugnahme auf die beiliegenden Zeichnungen näher erläutert und beschrieben. Dabei zeigen:
- Fig. 1: ein Ausführungsbeispiel der erfindungsgemäßen Befestigungsvorrichtung in einer perspektivischen Darstellung;
- Fig. 2: die in der Fig. 1 abgebildete Befestigungsvorrichtung in einer Draufsicht;
- Fig. 3: die in der Fig. 1 abgebildete Befestigungsvorrichtung in einer seitlichen Schnittdarstellung;
- Fig. 4: die in der Fig. 1 abgebildete Befestigungsvorrichtung in einer Seitenansicht;
- Fig. 5: ein Werkstück, aus welchem eine erfindungsgemäße Befestigungsvorrichtung hergestellt wird, vor Beginn des Herstellungsverfahrens, in einer perspektivischen Darstellung;
- Fig. 6: das in der Fig. 5 abgebildete Werkstück während der Herstellung der erfindungsgemäßen Befestigungsvorrichtung in einer perspektivischen Darstellung;
- Fig. 7: das in der Fig. 5 abgebildete Werkstück während der Herstellung der erfindungsgemäßen Befestigungsvorrichtung in einer perspektivischen Darstellung;
- Fig. 8: das in der Fig. 5 abgebildete Werkstück während der Herstellung der erfindungsgemäßen Befestigungsvorrichtung in einer perspektivischen Darstellung;
- Fig. 9: eine aus dem in der Fig. 5 abgebildeten Werkstück hergestellte erfindungsgemäße Befestigungsvorrichtung;
- Fig. 10: eine aus dem in der Fig. 5 abgebildeten Werkstück hergestellte erfindungsgemäße Befestigungsvorrichtung;
- Fig. 11: einen Ausschnitt aus einer Herstellungsmaschine für eine erfindungsgemäße Befestigungsvorrichtung in einer schematischen Darstellung;
- Fig. 12: ein weiteres Ausführungsbeispiel der erfindungsgemäßen Befestigungsvorrichtung in einer perspektivischen Darstellung;
- Fig. 13: ein weiteres Ausführungsbeispiel der erfindungsgemäßen Befestigungsvorrichtung in einer schematischen Seitenansicht;
- Fig. 14: ein weiteres Ausführungsbeispiel der erfindungsgemäßen Befestigungsvorrichtung in einer schematischen Seitenansicht;
- Fig. 15: ein weiteres Ausführungsbeispiel der erfindungsgemäßen Befestigungsvorrichtung in einer schematischen Draufsicht;
- Fig. 16: ein weiteres Ausführungsbeispiel der erfindungsgemäßen Befestigungsvorrichtung in einer schematischen Seitenansicht;
- Fig. 17: ein weiteres Ausführungsbeispiel der erfindungsgemäßen Befestigungsvorrichtung in einer schematischen Draufsicht;
- Fig. 18: ein weiteres Ausführungsbeispiel der erfindungsgemäßen Befestigungsvorrichtung in einer schematischen Draufsicht; und
- Fig. 19: ein weiteres Ausführungsbeispiel der erfindungsgemäßen Befestigungsvorrichtung in einer schematischen Draufsicht.

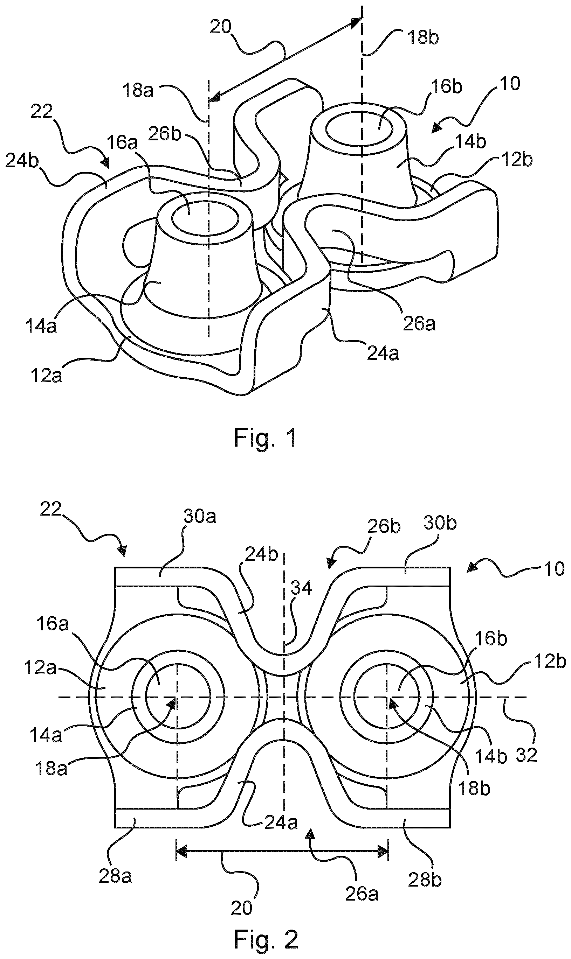

Die Fig. 1 bis 4 zeigen eine als Blechumformteil ausgebildete Befestigungsvorrichtung 10 mit zwei Aufnahmeabschnitten 12a, 12b und einer die zwei Aufnahmeabschnitte 12a, 12b miteinander verbindenden Verbindungsstruktur 22.

Wie in der Fig. 1 dargestellt, sind die zwei Aufnahmeabschnitte 12a, 12b beabstandet voneinander angeordnet und weisen jeweils eine Materialauskragung 14a, 14b auf. Die Materialauskragungen 14a, 14b können auch als Tuben bezeichnet werden, wobei die Bewandungen der Materialauskragungen 14a, 14b jeweils eine Aufnahmeausnehmung 16a, 16b umschließen. Die Aufnahmeausnehmungen 16a, 16b dienen jeweils zur Aufnahme eines Befestigungselements, wobei die Befestigungselemente Schrauben oder Stifte sein können. Die Innenbewandungen der Aufnahmeausnehmungen 16a, 16b können hierzu ein Gewinde aufweisen. Die Aufnahmeausnehmungen 16a, 16b erstrecken sich entlang der Mittelachsen 18a, 18b durch die gesamte Befestigungsvorrichtung 10. Die Mittelachsen 18a, 18b weisen einen Abstand 20 voneinander auf.

Die Verbindungsstruktur 22 umfasst zwei gegenüberliegende längliche Verbindungsstege 24a, 24b. Die Materialauskragungen 14a, 14b sind zwischen den Verbindungsstegen 24a, 24b angeordnet. Die Verbindungsstege 24a, 24b verbinden die Aufnahmeabschnitte 12a, 12b der Befestigungsvorrichtung 10 miteinander.

Die Verbindungsstege 24a, 24b verlaufen seitlich der Materialauskragungen 14a, 14b und weisen jeweils einen Krümmungsbereich 26a, 26b auf. Die Verbindungsstege 24a, 24b sind innerhalb des Krümmungsbereichs 26a, 26b gebogen ausgebildet. Über die Form der Krümmung bzw. Biegung kann der Abstand zwischen den Aufnahmeabschnitten 12a, 12b bzw. der Abstand 20 zwischen den Mittelachsen 18a, 18b der Aufnahmeausnehmungen 16a, 16b variiert werden.

Die Verbindungsstege 24a, 24b sind innerhalb des Krümmungsbereichs 26a, 26b abschnittsweise bogenförmig ausgebildet.

Die gegenüberliegenden Verbindungsstege 24a, 24b verlaufen außerhalb und seitlich beabstandet von der direkten Verbindungsachse zwischen den Materialauskragungen 14a, 14b. Die Aufnahmeabschnitte 12a, 12b sind in Längsrichtung voneinander beabstandet, wobei die Verbindungsstege 24a, 24b innerhalb des jeweiligen Krümmungsbereichs 26a, 26b in Querrichtung gebogen ausgebildet sind. Die Verbindungsstege 24a, 24b weisen innerhalb der jeweiligen Krümmungsbereiche 26a, 26b nämlich eine nach innen gerichtete seitliche Einbuchtung auf. Die seitliche Einbuchtung in dem Krümmungsbereich 26a des Verbindungsstegs 24a ist dem gegenüberliegenden Verbindungssteg 24b zugewandt. Die seitliche Einbuchtung in dem Krümmungsbereich 26b des Verbindungsstegs 24b ist dem gegenüberliegenden Verbindungssteg 24a zugewandt. Die Krümmungsbereiche 26a, 26b der Verbindungsstege 24a, 24b befinden sich zwischen den Materialauskragungen 14a, 14b.

Die Fig. 2 zeigt, dass die Befestigungsvorrichtung 10 spiegelsymmetrisch in Bezug auf eine sich in Längsrichtung erstreckende Symmetrieebene ausgebildet ist. Die sich in Längsrichtung erstreckende Symmetrieebene wird dabei durch die Längsachse 32 und die Mittelachsen 18a, 18b der Aufnahmeausnehmungen 16a, 16b aufgespannt.

Ferner ist die Befestigungsvorrichtung 10 spiegelsymmetrisch in Bezug auf eine sich in Querrichtung erstreckende Symmetrieebene ausgebildet. Die sich in Querrichtung erstreckende Symmetrieebene verläuft rechtwinklig zu der sich in Längsrichtung erstreckenden Symmetrieebene und umfasst die Querachse 34. Die sich in Querrichtung erstreckende Symmetrieebene schneidet die Krümmungsbereiche 26a, 26b der Verbindungsstege 24a, 24b jeweils an deren Scheitelpunkt.

Die Verbindungsstege 24a, 24b weisen jeweils vor und hinter den Krümmungsbereichen 26a, 26b Längserstreckungsbereiche 28a, 28b, 30a, 30b auf, wobei sich die Verbindungsstege 24a, 24b in den Längserstreckungsbereichen 28a, 28b, 30a, 30b parallel zur Längsachse 32 erstrecken.

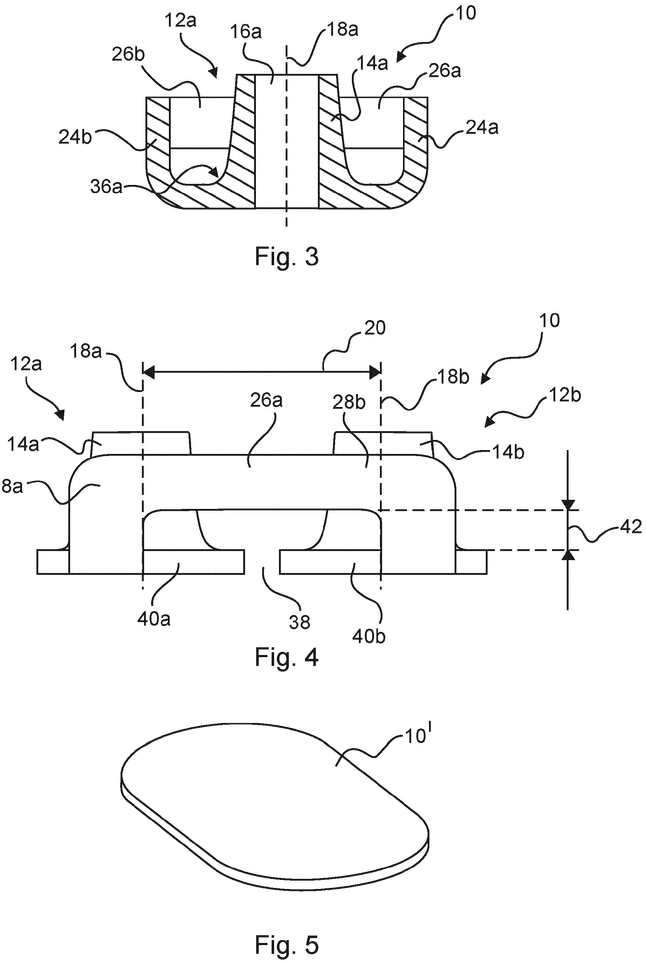

Die Schnittdarstellung der Fig. 3 zeigt, dass die Materialauskragungen 14a, 14b eine zumindest abschnittsweise konische äußere Mantelfläche aufweisen. Die Materialauskragungen 14a, 14b weisen außen eine Trichterform und innen eine zylindrische Aufnahmeausnehmung 16a, 16b auf. Die Materialstärke der Materialauskragungen 14a, 14b ist nicht konstant, sondern nimmt von dem stirnseitigen Ende in Richtung des Auskragungsansatzes 36a zu, sodass die Materialstärke im Bereich des Auskragungsansatzes 36a maximal ist. Ein entsprechender Materialstärkenverlauf wird dadurch erreicht, dass die Materialauskragungen 14a, 14b mittels Tubenziehen hergestellt sind.

Wie in der Fig. 4 dargestellt, erstrecken sich die Materialauskragungen 14a, 14b der Aufnahmeabschnitte 12a, 12b jeweils von einer Basisplatte 40a, 40b nach oben, wobei die Krümmungsbereiche 26a, 26b der zwei gegenüberliegenden Verbindungsstege 24a, 24b der Verbindungsstruktur 22 oberhalb der Basisplatten 40a, 40b verlaufen. Zwischen der Oberkante der Basisplatten 40a, 40b und der Unterkante der Krümmungsbereiche 26a, 26b der Verbindungsstege 24a, 24b befindet sich ein Abstand 42. Der Abstand 42 wird durch ein Umbiegen der Verbindungsstege 24a, 24b gegenüber den Basisplatten 40a, 40b nach oben erreicht. Im Gegensatz zu den Basisplatten 40a, 40b verlaufen die Verbindungsstege 24a, 24b somit aufrecht.

Zwischen den Basisplatten 40a, 40b befindet sich ein Freiraum 38, wobei der Freiraum 38 eine Änderung des Abstands zwischen den Aufnahmeabschnitten 12a, 12b ermöglicht.

Die Befestigungsvorrichtung 10 ist einstückig ausgebildet und kann beispielsweise aus dem in der Fig. 5 dargestellten Werkstück 10` hergestellt werden.

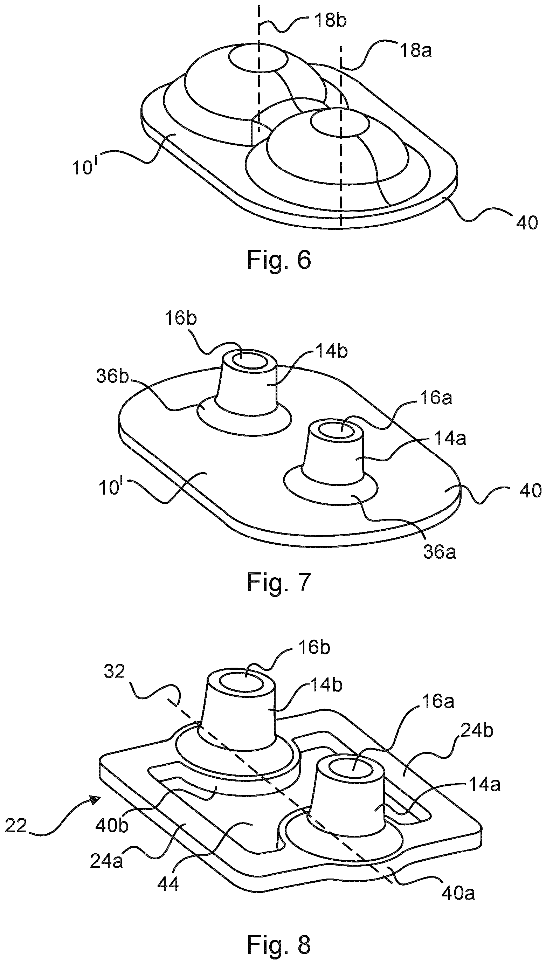

Die Fig. 6 bis 10 zeigen unterschiedliche Zustände des Werkstücks 10` während der Herstellung der Befestigungsvorrichtung 10. Die dargestellten Zustände durchläuft das Werkstück 10` während der Herstellung mittels eines Folgeverbundwerkzeugs.

Durch einen mehrstufigen Umformprozess werden zunächst die in der Fig. 6 dargestellten Wölbungen in dem Werkstück 10` erzeugt. Bei dem mehrstufigen Umformprozess handelt es sich um einen Tubenzieh-Vorgang, mittels welchem die in der Fig. 7 dargestellten Materialauskragungen 14a, 14b hergestellt werden. Nach Abschluss des Tubenzieh-Prozesses stehen die Materialauskragungen 14a, 14b auf einer Basisplatte 40 und die Bewandungen der Materialauskragungen 14a, 14b umschließen jeweils eine Aufnahmeausnehmung 16a, 16b, wobei die Aufnahmeausnehmungen 16a, 16b zur Aufnahme eines Befestigungselements dienen. Die Materialauskragungen 14a, 14b weisen am Auskragungsansatz 36a, 36b eine maximale Materialstärke auf.

Nachdem die Materialauskragungen 14a, 14b an dem Werkstück 10` erzeugt wurden, wird ein Materialabschnitt aus dem Werkstück 10' ausgeschnitten oder ausgestanzt. Wie die Fig. 8 zeigt, handelt es sich bei dem ausgeschnittenen oder ausgestanzten Materialabschnitt um ein Materialfenster in einem Bereich zwischen den Materialauskragungen 14a, 14b. Es entsteht somit eine Ausnehmung 44, welche sich über den Bereich der direkten Verbindungsachse zwischen den Materialauskragungen 14a, 14b erstreckt. Zusätzlich wird Material am Außenumfang des Werkstücks 10` ausgeschnitten oder ausgestanzt, sodass längliche Verbindungsstege 24a, 24b erzeugt werden. Die Verbindungsstege 24a, 24b sind auf gegenüberliegenden Seiten der Materialauskragungen 14a, 14b angeordnet und erstrecken sich parallel zu der Längsachse 32 des Werkstücks 10`.

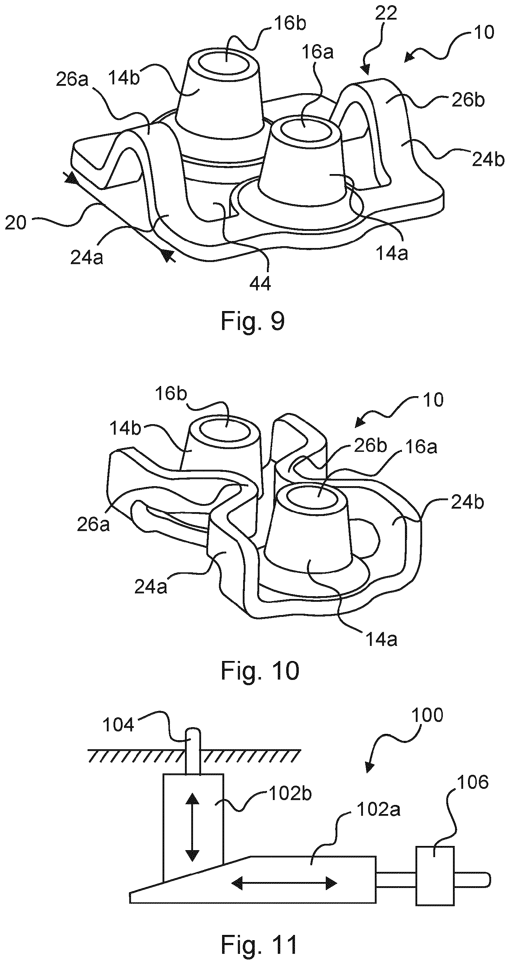

Wie in der Fig. 9 dargestellt, wird als nächstes der Abstand 20 zwischen den Materialauskragungen 14a, 14b durch Erzeugen einer Krümmung an den Verbindungsstegen 24a, 24b verändert, nämlich verkleinert. Die erzeugten Krümmungsbereiche 26a, 26b der Verbindungsstege 24a, 24b weisen zunächst eine nach oben gerichtete Einbuchtung auf.

Durch ein Umbiegen der Verbindungsstege 24a, 24b in Richtung der Materialauskragungen 14a, 14b wird die in der Fig. 10 dargestellte Befestigungsvorrichtung 10 erzeugt. Durch das Umbiegen sind die Einbuchtungen in den Krümmungsbereichen 26a, 26b nun zu seitlichen Einbuchtungen geworden, welche auf den jeweils gegenüberliegenden Verbindungssteg 24a, 24b gerichtet sind. Das Umbiegen der Verbindungsstege 24a, 24b erfolgt durch ein Hochklappen der Verbindungsstege 24a, 24b bzw. ein Umfalten der Verbindungsstege 24a, 24b in Richtung der Materialauskragungen 14a, 14b.

Die Fig. 11 zeigt einen Ausschnitt einer Herstellungsmaschine 100 zum Herstellen einer erfindungsgemäßen Befestigungsvorrichtung 10. Der dargestellte Ausschnitt zeigt Bestandteile eines Folgeverbundwerkzeugs, mittels welchen die Befestigungsvorrichtung 10 in großen Stückzahlen und kostengünstig herstellbar ist. Die Herstellungsmaschine 100 umfasst zwei bewegbare und einseitig keilförmig ausgebildete Körper 102a, 102b. Über die schiefe Gleitebene im Kontaktbereich zwischen den Körpern 102a, 102b kann ein Biegewerkzeug 104 translatorisch auf und ab bewegt werden. Die translatorische Bewegung des Biegewerkzeugs 104 wird durch den Antrieb 106 verursacht, über welchen der Körper 102a linear verfahren werden kann.

Das Biegewerkzeug 104 wird während der Herstellung der Befestigungsvorrichtung 10 gegen einen Verbindungssteg 24a, 24b verfahren, sodass der Verbindungssteg 24a, 24b mit einer Biegekraft beaufschlagt wird. Über die Beaufschlagung des Verbindungsstegs 24a, 24b mit der Biegekraft wird eine Krümmung an dem Verbindungssteg 24a, 24b erzeugt, wodurch der Abstand zwischen den Materialauskragungen 14a, 14b der Befestigungsvorrichtung 10 verkleinert wird. Über die Form bzw. Das Ausmaß der Krümmung in den Verbindungsstegen 24a, 24b kann somit der Abstand der Materialauskragungen 14a, 14b präzise auf ein gewünschtes Maß eingestellt werden. Alternativ zu dem dargestellten Keilschieber-System kann auch ein anderes kinematisches System zum Erzeugen des gebogenen Krümmungsbereichs eingesetzt werden. Beispielsweise kann ein System mit beweglichen Kniehebeln zum Erzeugen des gebogenen Krümmungsbereichs eingesetzt werden.

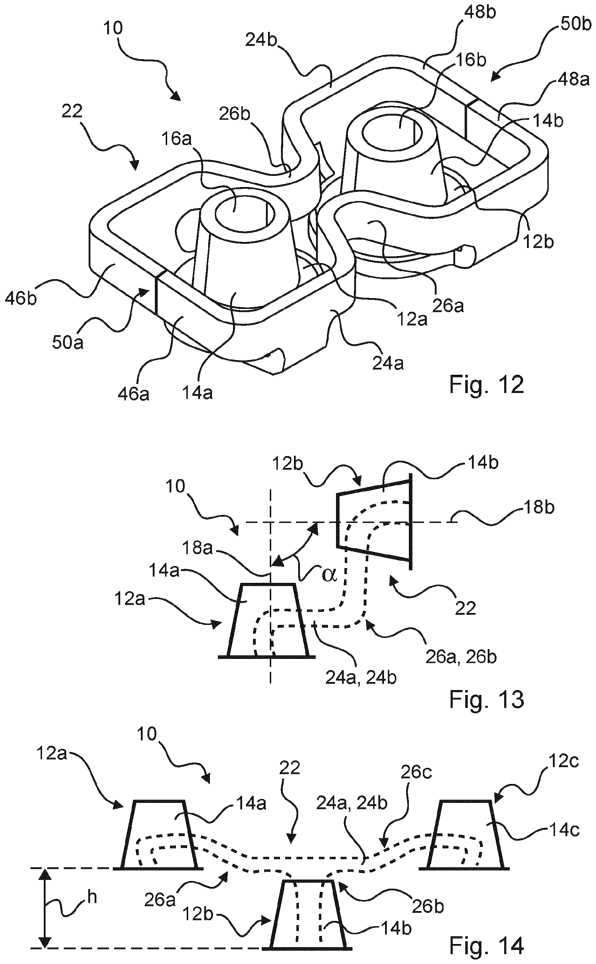

Die Fig. 12 zeigt eine Befestigungsvorrichtung 10, deren Verbindungsstruktur 22 zwei abschnittsweise gegenüberliegende längliche Verbindungsstege 24a, 24b aufweist. Die Verbindungsstege 24a, 24b sind jeweils innerhalb eines Krümmungsbereichs 26a, 26b gebogen ausgebildet. Außerhalb der gegenüberliegenden Abschnitte weisen die Verbindungsstege 24a, 24b stirnseitige Quererstreckungsbereiche 46a, 46b, 48a, 48b auf. Der Endabschnitt des Quererstreckungsbereichs 46a des Verbindungsstegs 24a ist mit dem Endabschnitt des Quererstreckungsbereichs 46b des Verbindungsstegs 24b gefügt. Die Quererstreckungsbereiche 46a, 46b sind an der Fügestelle 50a miteinander verschweißt. Der Endabschnitt des Quererstreckungsbereichs 48a des Verbindungsstegs 24a ist mit dem Endabschnitt des Quererstreckungsbereichs 48b des Verbindungsstegs 24b gefügt. Die Quererstreckungsbereiche 48a, 48b sind an der Fügestelle 50b miteinander verschweißt. Die länglichen Verbindungsstege 24a, 24b bilden somit eine umlaufende Struktur aus, über welche die Stabilität der Befestigungsvorrichtung 10 erheblich gesteigert wird.

Die Fig. 13 zeigt eine Befestigungsvorrichtung 10, bei welcher die Materialauskragungen 14a, 14b der Aufnahmeabschnitte 12a, 12b unterschiedliche Ausrichtungen aufweisen. Mittels der dargestellten Befestigungsvorrichtung 10 können beispielsweise Übereckbefestigungen umgesetzt werden. Die Mittelachsen 18a, 18b der Materialauskragungen 14a, 14b weisen einen Winkelversatz α zueinander auf. Der Winkelversatz α trägt vorliegend 90 Grad, sodass die Materialauskragungen 14a, 14b rechtwinklig zueinander angeordnet sind.

Die Fig. 14 zeigt eine Befestigungsvorrichtung 10 mit drei Aufnahmeabschnitten 12a, 12b, 12c. Die Aufnahmeabschnitte 12a, 12b, 12c sind mittels einer Verbindungsstruktur 22 miteinander verbunden. Die Verbindungsstege 24a, 24b der Verbindungsstruktur 22 sind innerhalb der Krümmungsbereiche 26a, 26b, 26c gebogen ausgebildet. Die Aufnahmeabschnitte 12a, 12b weisen einen Höhenversatz h zu dem Aufnahmeabschnitt 12b auf. Die Materialauskragungen 14a, 14b, 14c der Aufnahmeabschnitte 12a, 12b, 12c weisen die gleiche Ausrichtung auf, wobei die Materialauskragungen 14a, 14c in einer anderen Höhenebene als die Materialauskragung 14b angeordnet sind.

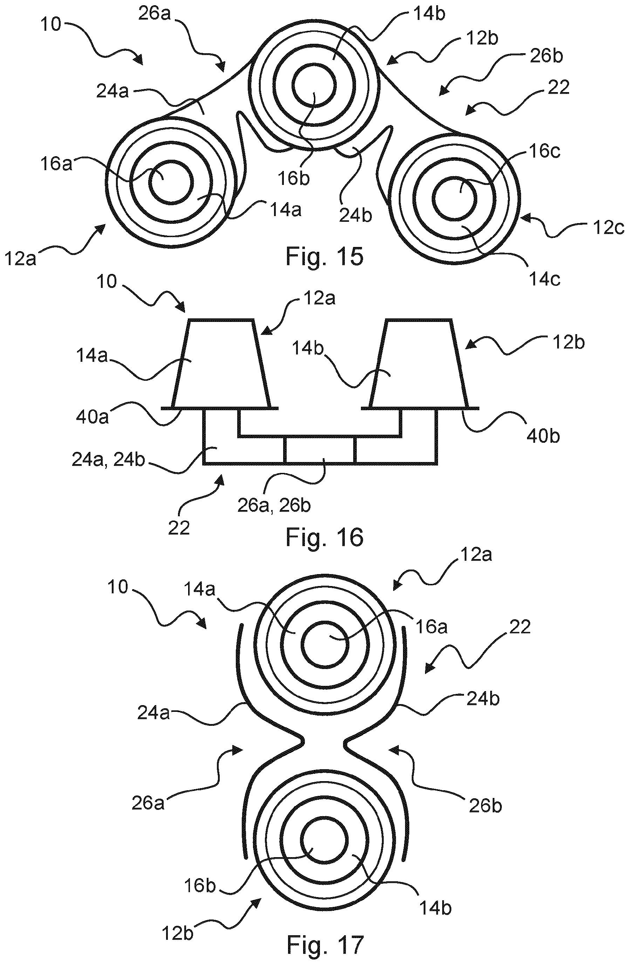

Die Fig. 15 zeigt ebenfalls eine Befestigungsvorrichtung 10 mit drei Aufnahmeabschnitten 12a, 12b, 12c. Die Aufnahmeabschnitte 12a, 12b, 12c sind beabstandet voneinander und weisen jeweils eine Materialauskragung 14a, 14b, 14c sowie eine von der Bewandung der Materialauskragung 14a, 14b, 14c umschlossene Aufnahmeausnehmung 16a, 16b, 16c zur Aufnahme eines Befestigungselements auf. Die Aufnahmeabschnitte 12a, 12b, 12c sind mittels einer Verbindungsstruktur 22 miteinander verbunden. Der längliche Verbindungssteg 24a der Verbindungsstruktur 22 verläuft abschnittsweise entlang der direkten Verbindungsachse zwischen den Materialauskragungen 14a, 14b. Der längliche Verbindungssteg 24b der Verbindungsstruktur 22 verläuft abschnittsweise entlang der direkten Verbindungsachse zwischen den Materialauskragungen 14b, 14c. Die länglichen Verbindungsstege 24a, 24b sind seitlich geschlitzt. Die seitliche Schlitzung vereinfacht die Einbringung der Biegung in den Krümmungsbereich 26a, 26b der jeweiligen Verbindungsstege 24a, 24b.

Die Fig. 16 zeigt eine Befestigungsvorrichtung 10, bei welcher sich die Materialauskragungen 14a, 14b der Aufnahmeabschnitte 12a, 12b jeweils von einer Basisplatte 40a, 40b nach oben erstrecken, wobei die Krümmungsbereiche 26a, 26b der länglichen Verbindungsstege 24a, 24b der Verbindungsstruktur 22 unterhalb der Basisplatten 40a, 40b verlaufen. Die länglichen Verbindungsstege 24a, 24b sind von den Materialauskragungen 14a, 14b weg und gegenüber den Basisplatten 40a, 40b nach unten umgebogen. Je nach Ausrichtung der Befestigungsvorrichtung 10 können sich die Materialauskragungen 14a, 14b der Aufnahmeabschnitte 12a, 12b auch von den Basisplatten 40a, 40b nach oben erstrecken, wobei die Krümmungsbereiche 26a, 26b der länglichen Verbindungsstege 24a, 24b der Verbindungsstruktur 22 in diesem Fall oberhalb der Basisplatten 40a, 40b verlaufen. Die länglichen Verbindungsstege 24a, 24b sind dann von den Materialauskragungen 14a, 14b weg und gegenüber den Basisplatten 40a, 40b nach oben umgebogen.

Die Fig. 17 bis 19 zeigen Befestigungsvorrichtungen 10, bei welchen die länglichen Verbindungsstege 24a, 24b unterschiedliche Krümmungskonfigurationen aufweisen.

Bei der in der Fig. 17 dargestellten Befestigungsvorrichtung 10 weisen die länglichen Verbindungsstege 24a, 24b beide innerhalb des Krümmungsbereichs 26a, 26b eine nach innen gerichtete seitliche Einbuchtung auf. Die seitlichen Einbuchtungen sind in Querrichtung nach innen gerichtete Wölbungen oder Bauchungen.

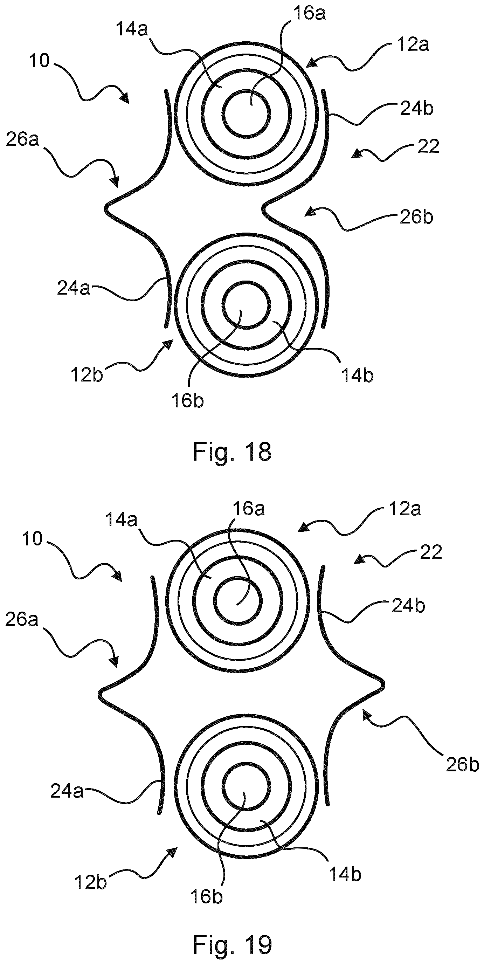

Bei der in der Fig. 18 dargestellten Befestigungsvorrichtung 10 weist der längliche Verbindungssteg 24a innerhalb des Krümmungsbereichs 26a eine nach außen gerichtete seitliche Ausbuchtung auf. Die seitliche Ausbuchtung ist eine in Querrichtung nach außen gerichtete Wölbung oder Bauchung. Der längliche Verbindungssteg 24b weist innerhalb des Krümmungsbereichs 26b eine nach innen gerichtete seitliche Einbuchtung auf. Die seitliche Einbuchtung ist eine in Querrichtung nach innen gerichtete Wölbung oder Bauchung.

Bei der in der Fig. 19 dargestellten Befestigungsvorrichtung 10 weisen die länglichen Verbindungsstege 24a, 24b beide innerhalb des Krümmungsbereichs 26a, 26b eine nach außen gerichtete seitliche Ausbuchtung auf. Die seitlichen Ausbuchtungen sind in Querrichtung nach außen gerichtete Wölbungen oder Bauchungen.

### Bezugszeichen

- 10: Befestigungsvorrichtung
- 10`: Werkstück
- 12a, 12b, 12c: Aufnahmeabschnitte
- 14a, 14b, 14c: Materialauskragungen
- 16a, 16b, 16c: Aufnahmeausnehmungen
- 18a, 18b: Mittelachsen
- 20: Abstand
- 22: Verbindungsstruktur
- 24a, 24b: Verbindungsstege
- 26a, 26b, 26c: Krümmungsbereiche
- 28a, 28b: Längserstreckungsbereiche
- 30a, 30b: Längserstreckungsbereiche
- 32: Längsachse
- 34: Querachse
- 36a, 36b: Auskragungsansätze
- 38: Freiraum
- 40, 40a, 40b: Basisplatten
- 42: Abstand
- 44: Ausnehmung
- 46a, 46b: Quererstreckungsbereiche
- 48a, 48b: Quererstreckungsbereiche
- 50a, 50b: Fügestellen

- 100: Herstellungsmaschine
- 102a, 102b: Körper
- 104: Biegewerkzeug
- 106: Antrieb

- α: Winkelversatz
- h: Höhenversatz

## Patentansprüche

1. Befestigungsvorrichtung (10), mit
- zumindest zwei Aufnahmeabschnitten (12a, 12b, 12c), welche voneinander beabstandet sind und jeweils eine Materialauskragung (14a, 14b, 14c) sowie eine von der Bewandung der Materialauskragung (14a, 14b, 14c) umschlossene Aufnahmeausnehmung (16a, 16b, 16c) zur Aufnahme eines Befestigungselements aufweisen; und
- einer Verbindungsstruktur (22), welche die zumindest zwei Aufnahmeabschnitte (12a, 12b, 12c) miteinander verbindet;
**dadurch gekennzeichnet, dass** die Materialauskragungen (14a, 14b, 14c) eine variierende Materialstärke aufweisen und die Verbindungsstruktur (22) zwei gegenüberliegende längliche Verbindungsstege (24a, 24b) umfasst, welche jeweils innerhalb eines Krümmungsbereichs (26a, 26b, 26c) gebogen ausgebildet sind, wobei die Materialauskragungen (14a, 14b, 14c) und die zwei gegenüberliegenden länglichen Verbindungsstege (24a, 24b) integrale Bestandteile eines einstückigen Körpers sind.

2. Befestigungsvorrichtung (10) nach Anspruch 1,
**dadurch gekennzeichnet, dass** die zwei gegenüberliegenden länglichen Verbindungsstege (24a, 24b) jeweils außerhalb und/oder zumindest abschnittsweise beabstandet von der direkten Verbindungachse zwischen den Materialauskragungen (14a, 14b, 14c) verlaufen.

3. Befestigungsvorrichtung (10) nach Anspruch 1 oder 2,
**dadurch gekennzeichnet, dass** die Aufnahmeabschnitte (12a, 12b, 12c) in einer Längsrichtung voneinander beabstandet sind und die zwei gegenüberliegenden länglichen Verbindungsstege (24a, 24b) jeweils innerhalb des Krümmungsbereichs (26a, 26b, 26c) in einer Querrichtung gebogen ausgebildet sind.

4. Befestigungsvorrichtung (10) nach einem der vorstehenden Ansprüche,
**dadurch gekennzeichnet, dass** die zwei gegenüberliegenden länglichen Verbindungsstege (24a, 24b) jeweils innerhalb des Krümmungsbereichs (26a, 26b, 26c) eine nach innen gerichtete seitliche Einbuchtung aufweisen.

5. Befestigungsvorrichtung (10) nach einem der vorstehenden Ansprüche,
**dadurch gekennzeichnet, dass** die gegenüberliegenden länglichen Verbindungsstege (24a, 24b) der Verbindungsstruktur (22) jeweils innerhalb des Krümmungsbereichs (26a, 26b) eine seitliche Einbuchtung in Richtung des gegenüberliegenden anderen länglichen Verbindungsstegs (24a, 24b) aufweisen.

6. Befestigungsvorrichtung (10) nach einem der vorstehenden Ansprüche,
**dadurch gekennzeichnet, dass** die Materialauskragungen (14a, 14b, 14c) der Aufnahmeabschnitte (12a, 12b, 12c) sich jeweils von einer Basisplatte (40, 40a, 40b) nach oben oder nach unten erstrecken, wobei die Krümmungsbereiche (26a, 26b) der zwei gegenüberliegenden länglichen Verbindungsstege (24a, 24b) der Verbindungsstruktur (22) oberhalb oder unterhalb der Basisplatten (40, 40a, 40b) verlaufen.

7. Befestigungsvorrichtung (10) nach einem der vorstehenden Ansprüche,
**dadurch gekennzeichnet, dass** die Befestigungsvorrichtung (10) spiegelsymmetrisch in Bezug auf eine sich in Längsrichtung erstreckende Symmetrieebene und/oder spiegelsymmetrisch in Bezug auf eine sich in Querrichtung erstreckende Symmetrieebene ausgebildet ist.

8. Befestigungsvorrichtung (10) nach einem der vorstehenden Ansprüche,
**dadurch gekennzeichnet, dass** die Befestigungsvorrichtung (10) einstückig ausgebildet ist.

9. Verfahren zum Herstellen einer Befestigungsvorrichtung (10), insbesondere einer Befestigungsvorrichtung (10) nach einem der vorstehenden Ansprüche, aus einem Werkstück (10'), mit dem Schritt:
- Erzeugen von zumindest zwei voneinander beabstandeten Materialauskragungen (14a, 14b, 14c) an dem Werkstück (10') in einem mehrstufigen Umformprozess;
**gekennzeichnet durch** die Schritte:
- Erzeugen von zwei die Materialauskragungen (14a, 14b, 14c) miteinander verbindenden gegenüberliegenden länglichen Verbindungsstegen (24a, 24b), wobei die Materialauskragungen (14a, 14b, 14c) eine variierende Materialstärke aufweisen und wobei die Materialauskragungen (14a, 14b, 14c) und die zwei gegenüberliegenden länglichen Verbindungsstege (24a, 24b) integrale Bestandteile eines einstückigen Körpers sind; und
- Verändern des Abstands (20) zwischen den Materialauskragungen (14a, 14b, 14c) durch Erzeugen jeweils einer Krümmung an den zwei gegenüberliegenden die Materialauskragungen (14a, 14b, 14c) miteinander verbindenden länglichen Verbindungsstegen (24a, 24b).

10. Verfahren nach Anspruch 9,
**gekennzeichnet durch** den Schritt:
- Umbiegen der zwei gegenüberliegenden länglichen Verbindungsstege (24a, 24b) jeweils in Richtung der Materialauskragungen (14a, 14b, 14c);
und/oder **dadurch, dass** das Erzeugen der die Materialauskragungen (14a, 14b, 14c) miteinander verbindenden länglichen Verbindungsstege (24a, 24b) durch Ausschneiden oder Ausstanzen eines Materialabschnitts aus dem Werkstück (10') erfolgt.

11. Verfahren nach Anspruch 10,
**dadurch gekennzeichnet, dass** das Umbiegen der zwei gegenüberliegenden länglichen Verbindungsstege (24a, 24b) in Richtung der Materialauskragungen (14a, 14b, 14c) nach dem Erzeugen der Krümmung an dem zumindest einen länglichen Verbindungssteg (24a, 24b) erfolgt.

12. Verfahren nach einem der Ansprüche 9 bis 11,
**dadurch gekennzeichnet, dass** die Materialauskragungen (14a, 14b, 14c) durch Tubenziehen erzeugt werden.

13. Verfahren nach einem der Ansprüche 9 bis 12,
**dadurch gekennzeichnet, dass** das Herstellen der Befestigungsvorrichtung (10) teilweise oder vollständig mittels eines Folgeverbundwerkzeugs und/oder eines Transferwerkzeugs erfolgt.

## Claims

1. Fastening device (10), with
- at least two receiving sections (12a, 12b, 12c), which are spaced apart and each have a material projection (14a, 14b, 14c) and a receiving recess (16a, 16b, 16c) enclosed by the wall of the material projection (14a, 14b, 14c) for receiving a fastening element; and
- a connecting structure (22) which connects the at least two receiving sections (12a, 12b, 12c) to one another;
**characterized in that** the material projections (14a, 14b, 14c) have a varying material thickness and the connecting structure (22) comprises two opposite elongate connecting bars (24a, 24b), which are each curved within a region of curvature (26a, 26b, 26c), wherein the material projections (14a, 14b, 14c) and the two opposed elongate connecting bars (24a, 24b) are integral parts of a one-piece body.

2. Fastening device (10) according to claim 1,
**characterized in that** the two opposite elongate connecting bars (24a, 24b) each run outside and/or spaced at least in sections from the direct connecting axis between the material projections (14a, 14b, 14c).

3. Fastening device (10) according to claim 1 or 2,
**characterized in that** the receiving sections (12a, 12b, 12c) are spaced apart from one another in a longitudinal direction and the two opposite elongate connecting bars (24a, 24b) are each curved in a transverse direction within the region of curvature (26a, 26b, 26c).

4. Fastening device (10) according to any one of the preceding claims, **characterized in that** the two opposite elongate connecting bars (24a, 24b) each have an inwardly directed lateral indentation within the region of curvature (26a, 26b, 26c).

5. Fastening device (10) according to any one of the preceding claims, **characterized in that** the opposite elongate connecting bars (24a, 24b) of the connecting structure (22) each have a lateral indentation within the region of curvature (26a, 26b) in the direction of the opposite other elongate connecting bar (24a, 24b).

6. Fastening device (10) according to any one of the preceding claims, **characterized in that** the material projections (14a, 14b, 14c) of the receiving sections (12a, 12b, 12c) each extend upwards or downwards from a base plate (40, 40a, 40b), the regions of curvature (26a, 26b) of the two opposite elongate connecting bars (24a, 24b) of the connecting structure (22) run above or below the base plates (40, 40a, 40b).

7. Fastening device (10) according to any one of the preceding claims, **characterized in that** the fastening device (10) is mirror-symmetrical with respect to a longitudinally extending plane of symmetry and/or mirror-symmetrical with respect to a transversely extending plane of symmetry.

8. Fastening device (10) according to any one of the preceding claims, **characterized in that** the fastening device (10) is designed in one piece.

9. A method for producing a fastening device (10), in particular a fastening device (10) according to any one of the preceding claims, from a workpiece (10 '), with the step:
- generating at least two material projections (14a, 14b, 14c) spaced apart from one another on the workpiece (10') in a multi-stage forming process;
**characterized by** the steps:
- generating of two opposite longitudinal connecting bars (24a, 24b) connecting the material projections (14a, 14b, 14c) to one another, the material projections (14a, 14b, 14c) having a varying material thickness and the material projections (14a, 14b, 14c) and the two opposed elongate connecting bars (24a, 24b) are integral parts of a one-piece body; and
- changing the distance (20) between the material projections (14a, 14b, 14c) by generating a curvature on the two opposite longitudinal connecting bars (24a, 24b) connecting the material projections (14a, 14b, 14c) to one another.

10. The method according to claim 9,
**characterized by** the step:
- bending over the two opposite elongate connecting bars (24a, 24b) in the direction of the material projections (14a, 14b, 14c);
and/or in that the elongate connecting bars (24a, 24b) connecting the material projections (14a, 14b, 14c) to one another are generated by cutting or punching out a material section from the workpiece (10').

11. The method according to claim 10,
**characterized in that** the two opposite elongate connecting bars (24a, 24b) are bent in the direction of the material projections (14a, 14b, 14c) after the curvature has been generated on the at least one elongate connecting bar (24a, 24b).

12. The method according to any one of claims 9 to 11,
**characterized in that** the material projections (14a, 14b, 14c) are generated by tube drawing.

13. The method according to any one of claims 9 to 12,
**characterized in that** the fastening device (10) is produced partially or completely by means of a progressive die and/or a transfer die.

## Revendications

1. Dispositif de fixation (10), doté
- d'au moins deux sections de réception (12a, 12b, 12c) espacées l'une de l'autre et qui présentent chacune une saillie de matériau (14a, 14b, 14c) ainsi qu'un évidement de réception (16a, 16b, 16c) entouré par la paroi de ladite saillie de matériau (14a, 14b, 14c) pour recevoir un élément de fixation ; et
- d'une structure de liaison (22) qui relie lesdites au moins deux sections de réception (12a, 12b, 12c) l'une à l'autre ;
**caractérisé en ce que** les saillies de matériau (14a, 14b, 14c) présentent une épaisseur de matériau variable et que ladite structure de liaison (22) comprend deux barrettes de liaison (24a, 24b) allongées et en vis-à-vis l'une de l'autre, chacune formée de manière incurvée à l'intérieur d'une zone de courbure (26a, 26b, 26c), les évidements de matériau (14a, 14b, 14c) et les deux barrettes de liaison (24a, 24b) allongées et en vis-à-vis l'une de l'autre faisant partie intégrante d'un corps d'un seul tenant.

2. Dispositif de fixation (10) selon la revendication 1,
**caractérisé en ce que** les deux barrettes de liaison allongées (24a, 24b) et en vis-à-vis l'une de l'autre passent chacune en dehors et/ou au moins espacées partiellement de l'axe de liaison direct entre les saillies de matériau (14a, 14b, 14c)

3. Dispositif de fixation (10) selon la revendication 1 ou 2,
**caractérisé en ce que** les sections de réception (12a, 12b, 12c) sont espacées l'une de l'autre dans un sens de la longueur et que les deux barrettes de liaison (24a, 24b) allongées et en vis-à-vis l'une de l'autre sont chacune formées incurvées dans un sens diagonal à l'intérieur de la zone de courbure (26a, 26b, 26c).

4. Dispositif de fixation (10) selon l'une quelconque des revendications précédentes,
**caractérisé en ce que** les deux barrettes de liaison (24a, 24b) allongées et en vis-à-vis l'une de l'autre présentent chacune, à l'intérieur de la zone de courbure (26a, 26b, 26c), un renfoncement latéral dirigé vers l'intérieur.

5. Dispositif de fixation (10) selon l'une quelconque des revendications précédentes,
**caractérisé en ce que** les barrettes de liaison (24a, 24b) de la structure de liaison (22), allongées et en vis-à-vis l'une de l'autre, présentent chacune à l'intérieur de la zone de courbure (26a, 26b) un renfoncement latéral dans le sens de l'autre barre de liaison (24a, 24b) allongée et en vis-à-vis.

6. Dispositif de fixation (10) selon l'une quelconque des revendications précédentes,
**caractérisé en ce que** les saillies de matériau (14a, 14b, 14c) des sections de réception (12a, 12b, 12c) s'étendent chacune d'une plaque de base (40, 40a, 40b) vers le haut ou vers le bas, les zones de courbure (26a, 26b) des deux barrettes de liaison (24a, 24b) de la structure de liaison (22), allongées et en vis-à-vis l'une de l'autre, passant au-dessus ou au-dessous des plaques de base (40, 40a, 40b).

7. Dispositif de fixation (10) selon l'une quelconque des revendications précédentes,
**caractérisé en ce que** le dispositif de fixation (10) est conçu avec une symétrie spéculaire par rapport à un plan de symétrie s'étendant dans un sens longitudinal et/ou avec une symétrie spéculaire par rapport à un plan de symétrie s'étendant dans un sens transversal.

8. Dispositif de fixation (10) selon l'une quelconque des revendications précédentes,
**caractérisé en ce que** le dispositif de fixation (10) est conçu d'un seul tenant.

9. Procédé de fabrication d'un dispositif de fixation (10), notamment d'un dispositif de fixation (10) selon l'une quelconque des revendications précédentes, à partir d'une pièce à usiner (10'), avec l'étape :
- Réalisation d'au moins deux saillies de matériau (14a, 14b, 14c) espacés l'une de l'autre sur la pièce à usiner (10'), dans un procédé de transformation en plusieurs étapes ;
**caractérisé par** les étapes :
- Réalisation de deux barrettes de liaison (24a, 24b), allongées et en vis-à-vis l'une de l'autre, reliant les deux saillies de matériau (14a, 14b, 14c) l'une à l'autre, lesdites saillies de matériau (14a, 14b, 14c) présentant une épaisseur de matériau variable, et les saillies de matériau (14a, 14b, 14c) et les deux barrettes de liaison (24a, 24b) allongées et en vis-à-vis l'une de l'autre faisant partie intégrante d'un corps d'un seul tenant ; et
- Modification de la distance (20) entre les saillies de matériau (14a, 14b, 14c) par réalisation d'une courbure respective aux deux barrettes de liaison (24a, 24b) allongées et en vis-à vis l'une de l'autre et reliant les saillies de matériau (14a, 14b, 14c).

10. Procédé selon la revendication 9,
**caractérisé par** l'étape :
- Pliage des deux barrettes de liaison (24a, 24b) allongées et en vis-à-vis l'une de l'autre, chacune dans le sens des saillies de matériau (14a, 14b, 14c) ;
et/ou par le fait que la réalisation des barrettes de liaison (24a, 24b) allongées et reliant les saillies de matériau (14a, 14b, 14c) l'une à l'autre s'effectue par découpe ou estampage d'une section de matériau dans la pièce à usiner (10').

11. Procédé selon la revendication 10,
**caractérisé en ce que** le pliage des deux barrettes de liaison (24a, 24b) allongées et en vis-à-vis l'une de l'autre, dans le sens des saillies de matériau (14a, 14b, 14c), s'effectue après la réalisation de la courbure sur ladite au moins une barrette de liaison (24a, 24b) allongée.

12. Procédé selon l'une quelconque des revendications 9 à 11,
**caractérisé en ce que** les saillies de matériau (14a, 14b, 14c) sont créées par étirage de tube.

13. Procédé selon l'une quelconque des revendications 9 à 12,
**caractérisé en ce que** la fabrication du dispositif de fixation (10) s'effectue partiellement ou intégralement au moyen d'un outil à suivre et/ou d'un outil de transfert.
